**Europäisches Patentamt**

**European Patent Office**

**Office européen des brevets**

(19)

(11) Veröffentlichungsnummer : **0 228 380**
**B1**

(12) **EUROPÄISCHE PATENTSCHRIFT**

(45) Veröffentlichungstag der Patentschrift :
**15.03.89**

(21) Anmeldenummer : **85905617.8**

(22) Anmeldetag : **25.10.85**

(86) Internationale Anmeldenummer :
**PCT/EP 85/00563**

(87) Internationale Veröffentlichungsnummer :
**WO/8602981 (22.05.86 Gazette 86/11)**

(51) Int. Cl.⁴ : **F 16 H   1/445, B 60 K 23/04//**
**F16D27/12**

(54) **ELEKTROMAGNETISCH BETÄTIGTE SPERRKUPPLUNG FÜR KRAFTFAHRZEUG-DIFFERETIALGETRIEBE.**

(30) Priorität : **06.11.84 PCT/EP84/00352**

(43) Veröffentlichungstag der Anmeldung :
**15.07.87 Patentblatt 87/29**

(45) Bekanntmachung des Hinweises auf die Patenterteilung : **15.03.89 Patentblatt 89/11**

(84) Benannte Vertragsstaaten :
**DE FR GB IT SE**

(56) Entgegenhaltungen :
**DE--A-- 2 920 107**
**FR--A-- 1 172 207**
**GB--A-- 2 129 886**
**US--A-- 2 936 054**
**US--A-- 2 966 975**

(73) Patentinhaber : **ZAHNRADFABRIK FRIEDRICHSHAFEN AKTIENGESELLSCHAFT**
**Löwentaler Strasse 100 Postfach 2520**
**D-7990 Friedrichshafen 1 (DE)**

(72) Erfinder : **SCHREINER, Friedrich**
**Eichelen 16**
**D-7996 Kehlen-Reute (DE)**
Erfinder : **GRIESSER, Walter**
**Weidenring 55**
**D-7990 Friedrichshafen 1 (DE)**

(74) Vertreter : **Raue, Reimund**
**Zahnradfabrik Friedrichshafen AG Löwentaler**
**Strasse 100 Postfach 2520**
**D-7990 Friedrichshafen 1 (DE)**

**Beschreibung**

Die Erfindung betrifft eine elektromagnetisch betätigte Sperrkupplung für Differentialgetriebe für Kraftfahrzeuge, mit einem gehäusefesten, ringförmigen Elektromagneten.

Sperrkupplungen sollen den Drehzahlausgleich des Differentialgetriebes begrenzen oder sperren, wenn ein angetriebenes Rad für kurze oder längere Zeit keine oder zu wenig Antriebskraft auf den Boden übertragen kann.

Eine elektromagnetisch betätigte formschlüssige Klauenkupplung ist als Sperrkupplung gut geeignet, wenn und solange wenigstens ein angetriebenes Rad auf glattem Boden rutschen kann. Erreicht jedoch auch dieses Rad wieder griffigen Boden, gibt es bei Kurvenfahrt Blindleistung im Differentialgetriebe, zusätzlichen Reifenverschleiß besonders am kurveninneren angetriebenen Rad und dazu noch große Kräfte in der Lenkeinrichtung, solange die Klauenkupplung geschlossen bleibt. Die Klauenkupplung muß dann schnell wieder geöffnet werden.

Eine elektromagnetisch betätigte kraftschlüssige Reibkupplung ist als Sperrkupplung gut geeignet, wenn bei schneller Fahrt auf griffigem Boden ein angetriebenes Rad immer nur kurzzeitig auf glatten Boden gerät oder vom Boden abhebt, dann jedoch sofort wieder griffigen Boden erreicht. In diesem Fall soll der Drehzahlausgleich durch das Differentialgetriebe nicht völlig gesperrt, sondern nur so weit begrenzt werden, daß das rutschende oder springende Rad dem Kraftfahrzeug keinen gefährlichen Stoß gibt, der zum Schleudern führen könnte, wenn das Rad wieder griffigen Boden erreicht.

Eine Reibkupplung als elektromagnetisch betätigte Sperrkupplung für Differentialgetriebe für Kraftfahrzeuge, mit einem gehäusefesten Elektromagneten, ist an sich bekannt (DE-PS 29 20 107). Eine Sperrkupplung nach DE-PS 29 20 107 benutzt zur Übertragung der Schaltkraft von dem den Magnetanker des Elektromagneten bildenden Ringkörper auf die beiden Reibkupplungen eine Reihe von hydraulischen Zwischengliedern in der Form von Druckbolzen und Betätigungskolben, die in Führungsbohrungen und weiteren Zylinderbohrungen im Differentialkorb geführt und abgedichtet und durch Hydraulikkanäle im Differentialkorb miteinander verbunden sind. Die Abdichtung der Druckbolzen und Betätigungskolben und die Wärmedehnung des Öls in den Hydraulikkanälen bereiten große Probleme.

Elektromagnetisch betätigte Reibkupplungen und Klauenkupplungen an sich sind auch bekannt aus US 29 36 054 und US 29 66 975. US 29 66 975 zeigt in Fig. 1 und Fig. 2 Reibkupplungen und in Fig. 3, Fig. 4 und Fig. 5 Klauenkupplungen mit Merkmalen unserer Erfindung. Auch US 29 36 054 zeigt eine Reibkupplung mit Merkmalen unserer Erfindung. In keiner dieser zwei Schriften ist jedoch eine Anwendung als Sperrkupplung für Differentialgetriebe für Kraftfahrzeuge erwähnt.

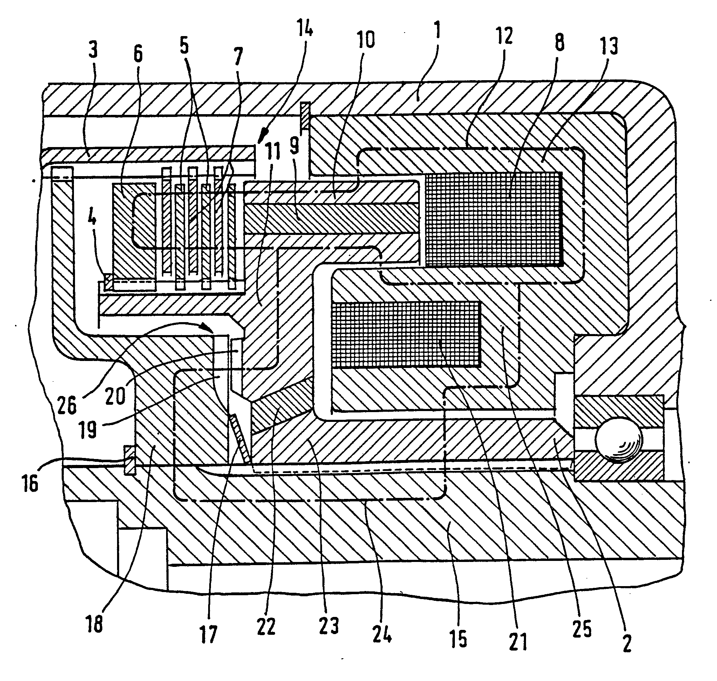

Alle drei genannten Schriften zeigen und beschreiben entweder eine Reibkupplung oder eine Klauenkupplung.

Eine elektromagnetisch betätigte Reibkupplung benötigt im Vergleich zu einer Klauenkupplung für ein gleich großes Drehmoment einen großen Elektromagneten und einen großen elektrischen Strom. Das Problem einer solchen Reibkupplung als Sperrkupplung für Differentialgetriebe für Kraftfahrzeuge ist die Kühlung bei langsamer Fahrt. Das Problem einer Klauenkupplung als Sperrkupplung für Differentialgetriebe für Kraftfahrzeuge ist das häufige Öffnen und Schließen bei schneller Fahrt, weil die Schaltklauen dann schnell verschleißen.

Der Erfindung liegt die Aufgabe zugrunde, eine elektromagnetisch betätigte Sperrkupplung für Differentialgetriebe für Kraftfahrzeuge zu schaffen, die für häufiges Öffnen und Schließen bei schneller Fahrt auf griffigem Boden und zusätzlich auch für langzeitiges Schließen bei langsamer Fahrt auf glattem Boden geeignet ist.

Diese Aufgabe wird mit den Merkmalen des Anspruchs 1 gelöst, weil für jeden der genannten kritischen Fahrzustände eine eigene, gut geeignete Sperrkupplung vorhanden ist, und weil immer nur die besser geeignete Sperrkupplung betätigt werden muß.

Die Ansprüche 2 bis 5 nennen weitere vorteilhafte Merkmale für eine Sperrkupplung nach der Erfindung.

Die Zeichnung zeigt ein Ausführungsbeispiel einer Sperrkupplung nach der Erfindung als Ausschnitt aus einem Längsschnitt.

In einem Gehäuse 1 sind zwei nicht dargestellte Zentralräder als zwei Anschlußglieder eines nicht dargestellten Differentialgetriebes gelagert. Mit dem ersten Anschlußglied ist eine Nabe 2 fest verbunden. Mit dem zweiten Anschlußglied ist eine Glocke 3 fest verbunden. Die Nabe 2 trägt, drehfest und axial beweglich, begrenzt durch einen Sicherungsring 4, erste Reibglieder 5 und einen Magnetanker 6. Die Glocke 3 trägt, drehfest und axial beweglich, begrenzt durch den Magnetanker 6, zweite Reibglieder 7. Die zweiten Reibglieder 7 sind als Wellenscheibenfedern ausgebildet.

In dem Gehäuse 1 ist eine Magnetspule 8 befestigt. Ein Isolierring 9 trennt einen magnetisch leitenden radial äußeren Bereich 10 von einem magnetisch leitenden radial mittleren Bereich 11 der Nabe 2. Ein elektrischer Strom in der Magnetspule 8 erzeugt einen Magnetfluß 12 in einem magnetisch leitenden Bereich 13 um die Magnetspule 8, durch die beiden Bereiche 10, 11 der Nabe 2, durch die magnetisch leitenden Reibglieder 5, 7 und den Magnetanker 6. Der Magnetanker 6 bildet gleichzeitig ein Reibglied und ein Betätigungsglied einer Reibkupplung 14. Die Reibkupplung 14 bildet eine erste Sperrkupplung für das Differentialgetriebe.

Die Nabe 2 ist auf einer Welle 15 befestigt. Die Welle 15 trägt drehbar und axial beweglich, begrenzt durch einen Sicherungsring 16, eine Tellerfeder 17 und einen zweiten Magnetanker 18. Der zweite Magnetanker 18 ist drehfest und axial beweglich mit der Glocke 3 verbunden. Der zweite Magnetanker 18 bildet zusätzlich eine Schaltklaue 19. Die Nabe 2 bildet in ihrem mittleren Bereich 11 eine dazu passende Schaltklaue 20.

In dem Gehäuse 1 ist, radial innerhalb der ersten Magnetspule 8, eine zweite Magnetspule 21 befestigt. Ein zweiter Isolierring 22 trennt den radial mittleren Bereich 11 von einem magnetisch leitenden radial inneren Bereich 23 der Nabe 2. Ein elektrischer Strom in der zweiten Magnetspule 21 erzeugt einen zweiten Magnetfluß 24 in einem magnetisch leitenden Bereich 25 um die zweite Magnetspule 21, durch die beiden Bereiche 11, 23 der Nabe 2, durchflutet dabei auch die Schaltklauen 19, 20 des zweiten Magnetankers 18 und der Nabe 2. Der zweite Magnetanker 18 bildet damit ein Betätigungsglied einer Klauenkupplung 26. Die Klauenkupplung 26 bildet eine zweite Sperrkupplung für das Differentialgetriebe.

Eine Rückstellkraft von als Wellenscheibenfedern ausgebildeten zweiten Reibgliedern 7 öffnet, ein elektrischer Strom in der ersten Magnetspule 8 schließt die Reibkupplung 14.

Eine Rückstellkraft einer als Tellerfeder ausgebildeten Feder 17 öffnet, ein elektrischer Strom in einer Magnetspule 21 schließt die Klauenkupplung 26.

Nicht dargestellt, weil bekannt und üblich, sind Einrichtungen zur willkürlichen Betätigung und zur Steuerung und Regelung der beiden Sperrkupplungen. Dazu gehören Drehzahlfühler für die Drehzahlen der beiden Anschlußglieder, Eingabeglieder und Datenspeicher zur willkürlichen Eingabe und Speicherung von Grenzwerten für eine Relativdrehzahl und eine Betätigungszeit, ein Zeittaktgeber, ein Mikroprozessor mit einem Differenzbilder zur Ermittlung einer Relativdrehzahl aus den beiden Drehzahlen, mit einem Vergleicher zum Vergleich der Relativdrehzahl mit einem Grenzwert und zur Bildung eines Alarmsignals zum Steuern eines elektrischen Stromes zum Schließen der Reibkupplung 14, mit einem Taktzähler zur Bildung einer Betätigungszeit der Klauenkupplung 26, mit einem Vergleicher zum Vergleich der Betätigungszeit mit einem Grenzwert und zur Bildung eines Alarmsignals zur Warnung des Fahrers und/oder zum Abschalten eines elektrischen Stromes und damit zum Öffnen der Klauenkupplung 26.

<div align="center">Bezugszeichen</div>

| | | |
|---|---|---|
| 1 | Gehäuse | housing |
| 2 | Nabe | hub |
| 3 | Glocke | shell |
| 4 | Sicherungsring | guard ring |
| 5 | Reibglied | friction element |
| 6 | Magnetanker | armature |
| 7 | Reibglied, Wellenscheibenfeder | friction element, corrugated spring washer |
| 8 | Magnetspule, E-Magnet | magnet coil |
| 9 | Isolierring | insulating ring |
| 10 | Bereich | zone |
| 11 | Bereich | zone |
| 12 | Magnetfluß | magnetic flux |
| 13 | Bereich | zone |
| 14 | Reibkupplung, Reibsperrkupplung | friction clutch, sliplimiting friction clutch |
| 15 | Welle | shaft |
| 16 | Sicherungsring | guard ring |
| 17 | Tellerfeder, Feder | cup spring, spring |
| 18 | Magnetanker | armature |
| 19 | Schaltklaue | shift dog |
| 20 | Schaltklaue | shift dog |
| 21 | Magnetspule, E-Magnet | magnet coil |
| 22 | Isolierring | insulating ring |
| 23 | Bereich | zone |
| 24 | Magnetfluß | magnetic flux |
| 25 | Bereich | zone |
| 26 | Klauenkupplung, Klauensperrkupplung | dog clutch, sliplimiting dog clutch |

**Patentansprüche**

1. Elektromagnetisch betätigte Sperrkupplung für Differentialgetriebe für Kraftfahrzeuge, mit den Merkmalen :

ein erstes drehmomentübertragendes Anschlußglied des Differentialgetriebes trägt drehfest erste Reibglieder (5),

**EP 0 228 380 B1**

ein zweites Anschlußglied trägt drehfest zweite Reibglieder (7),

die Reibglieder bilden eine Reibsperrkupplung (14) für das Differentialgetriebe,

ein gehäusefester ringförmiger Elektromagnet (8) mit einem drehbaren ringförmigen Magnetanker (6) schließt die Reibsperrkupplung, gekennzeichnet durch die Merkmale :

das erste Anschlußglied trägt zusätzlich drehfest eine erste Schaltklaue (20),

das zweite Anschlußglied trägt zusätzlich drehfest eine zweite Schaltklaue (19),

die Schaltklauen (19, 20) bilden eine Klauensperrkupplung (26) für das Differentialgetriebe,

ein zweiter gehäusefester ringförmiger Elektromagnet (21) mit einem zweiten drehbaren ringförmigen Magnetanker (18) schließt die Klauensperrkupplung (26),

eine Feder (17) öffnet die Klauensperrkupplung (26).

2. Sperrkupplung nach Anspruch 1, gekennzeichnet durch die Merkmale :

die ersten Reibglieder (5) haben ebene Reibflächen,

auch der erste Magnetanker (6) bildet ein erstes Reibglied,

auch die zweiten Reibglieder (7) haben im wesentlichen ebene Reibflächen, sind jedoch zusätzlich als Wellenscheibenfedern ausgebildet und öffnen die Reibsperrkupplung (14),

der zweite Magnetanker (18) bildet zusätzlich die zweite Schaltklaue (19).

3. Sperrkupplung nach Anspruch 1, gekennzeichnet durch die Merkmale :

eine Nabe (2) ist über eine Welle (15) drehfest mit dem ersten Anschlußglied verbunden,

die Nabe (2) trägt drehfest die ersten Reibglieder (5, 6) der Reibsperrkupplung (14) und bildet zusätzlich die erste Schaltklaue (20) der Klauensperrkupplung (26),

eine Glocke (3) ist drehfest mit dem zweiten Anschlußglied verbunden,

die Glocke (3) trägt drehfest die zweiten Reibglieder (5) der Reibsperrkupplung (14) und ist zusätzlich drehfest mit dem Magnetanker (18) für die Klauensperrkupplung (26) verbunden,

der Magnetanker (18) bildet zusätzlich die zweite Schaltklaue (19) für die Klauensperrkupplung (26).

4. Sperrkupplung nach Anspruch 1, gekennzeichnet durch die Merkmale :

ein erster Isolierring (9) trennt magnetisch und verbindet mechanisch einen magnetisch leitenden, radial äußeren Bereich (10) einer Nabe (2) von und mit einem radial mittleren Bereich (11) der Nabe (2),

ein zweiter Isolierring (22) trennt und verbindet den mittleren Bereich (11) von und mit einem radial inneren Bereich (23) der Nabe (2),

ein elektrischer Strom in dem ersten Elektromagneten (8) erzeugt einen ersten Magnetfluß (12) für die Reibsperrkupplung (14),

ein elektrischer Strom in dem zweiten Elektromagneten (21) erzeugt einen zweiten Magnetfluß (24) für die Klauensperrkupplung (26),

der mittlere Bereich (11) der Nabe (2) leitet sowohl den ersten Magnetfluß (12) als auch den zweiten Magnetfluß (24),

der mittlere Bereich (11) der Nabe (2) trägt drehfest die ersten Reibglieder (6, 5) der Reibsperrkupplung (14) und bildet zusätzlich die erste Schaltklaue (20) der Klauensperrkupplung (26).

5. Sperrkupplung nach Anspruch 1, gekennzeichnet durch die Merkmale :

eine Einrichtung ermittelt eine Relativdrehzahl zwischen den zwei Anschlußgliedern und steuert selbsttätig einen elektrischen Strom für den ersten Elektromagneten (8),

ein Schalter schließt willkürlich einen elektrischen Stromkreis für den zweiten Elektromagneten (21),

die Einrichtung öffnet selbsttätig den elektrischen Stromkreis für den zweiten Elektromagneten (21).

## Claims

1. Magnet-coil-operated sliplimiting clutch for differential transmissions for motor vehicles, having the following characteristics :

a first torque-transmitting connecting element non-rotatably carries first friction elements (5),

a second torque-transmitting connecting element non-rotatably carries second friction elements (7),

the friction elements form a sliplimiting friction clutch (14) for the differential transmission,

a ring-shaped magnet coil (8) fixed in a housing and having a rotatable ring-shaped armature (6) closes the sliplimiting friction clutch, characterised by the following features :

the first connecting element additionally non-rotatably carries a first shift dog (20),

the second connecting element additionally non-rotatably carries a second shift dog (19),

the shift dogs (19, 20) form a sliplimiting dog clutch (26) for the differential transmission,

a second ring-shaped magnet coil (21) fixed in a housing and having a second rotatable ring-shaped armature (18) closes the sliplimiting dog clutch (26),

a spring (17) opens the sliplimiting dog clutch (26).

2. Sliplimiting clutch according to claim 1, characterised by the following features :

the first friction elements (5) have plane friction surfaces,

the first armature (6) also forms a first friction element,

the second friction elements (7) also have essentially plane friction elements, but are additionally shaped as corrugated spring washers and open sliplimiting friction clutch (14),

the second armature (18) additionally forms the second shift dog (19).

3. Sliplimiting clutch according to claim 1, characterised by the following features :

a hub (2) is non-rotatably connected with the first connecting element via a shaft (15),

hub (2) non-rotatably carries first friction elements (5, 6) of sliplimiting friction clutch (14) and additionally forms the first shift dog (20) of sliplimiting dog clutch (26),

a shell (3) is non-rotatably connected with the second connecting element,

shell (3) non-rotatably carries second friction elements (5) of sliplimiting friction clutch (14) and in addition is non-rotatably connected with armature (18) for the sliplimiting dog clutch (26),

armature (18) additionally forms the second shift dog (19) for sliplimiting dog clutch (26).

4. Sliplimiting clutch according to claim 1, characterised by the following features :

a first insulating ring (9) magnetically separates and mechanically connects a magnetically conducting, radially outer zone (10) of a hub (2) from and with a radially intermediate zone (11) of hub (2),

a second insulating ring (22) separates and connects the intermediate zone (11) from and with a radially inner zone (23) of hub (2),

an electrical current in the first magnet coil (8) generates a first magnetic flux (12) for sliplimiting friction clutch (14),

an electrical current in the second magnet coil (21) generates a second magnetic flux (24) for the sliplimiting dog clutch (26),

the intermediate zone (11) of hub (2) conducts both the first magnetic flux (12) and the second magnetic flux (24),

the intermediate zone (11) of hub (2) non-rotatably carries first friction elements (6, 5) of sliplimiting friction clutch (14) and additionally forms the first shift dog (20) of sliplimiting dog clutch (26).

5. Sliplimiting clutch according to claim 1, characterised by the following features :

a device ascertains a relative speed between the two connecting elements and automatically controls an electrical current for the first magnet coil (8),

a switch closes at will an electrical circuit for the second magnet coil (21),

the device automatically opens the electrical circuit for the second magnet coil (21).


## Revendications

1. Embrayage de blocage à commande électromagnétique pour des différentiels de véhicules à moteur, dans lequel :

un premier élément de transmission de couple du différentiel porte des premiers éléments de friction (5) qui sont solidaires de lui en rotation,

un second élément de transmission de couple porte des seconds éléments de friction (7) qui sont solidaires de lui en rotation,

les éléments de friction forment un embrayage de blocage à friction (14) du différentiel,

un électro-aimant annulaire stationnaire (8) ferme l'embrayage de blocage à friction au moyen d'une armature annulaire rotative d'électro-aimant (6), caractérisé en ce que :

le premier élément de transmission porte en outre un premier crabot (20) qui est solidaire de lui en rotation,

le second élément de transmission porte en outre un second crabot (19) qui est solidaire de lui en rotation,

les crabots (19, 20) forment un embrayage de blocage à crabots (26) pur le différentiel,

un second élément annulaire stationnaire (21) ferme l'embrayage de blocage à crabots (26) au moyen d'une seconde armature annulaire rotative d'électro-aimant (18),

un ressort (17) ouvre l'embrayage de blocage à crabots (26).

2. Embrayage de blocage selon la revendication 1, caractérisé en ce que :

les premiers éléments de friction (5) comportent des surfaces de friction qui sont planes,

la première armature d'électro-aimant (6) constitue un premier élément de friction,

les seconds éléments de friction (7) comportent également des surfaces de friction sensiblement planes, mais ils ont en outre la forme de disques élastiques ondulés et ils ouvrent l'embrayage de blocage à friction (14),

la seconde armature d'électro-aimant (18) constitue en outre le second crabot (19).

3. Embrayage de blocage selon la revendication 1, caractérisé en ce que :

un moyeu (2) est rendu solidaire en rotation du premier élément de transmission au moyen d'un arbre (15),

le moyeu (2) porte les premiers éléments de friction (5, 6) de l'embrayage de blocage à friction (14) en étant solidaire d'eux en rotation et il constitue en outre le premier crabot (20) de l'embrayage de blocage à crabots (26),

une cloche (3) est liée en rotation au second élément de transmission,

la cloche (3) porte les seconds éléments de friction (5) de l'embrayage de blocage à friction (14) en étant solidaire d'eux en rotation et elle est également solidaire en rotation de l'armature d'électro-aimant (18) de l'embrayage de blocage à crabots (26),

ladite armature d'électro-aimant (18) constitue en outre le second crabot (19) de l'embrayage de blocage à crabots (26).

4. Embrayage de blocage selon la revendication 1, caractérisé en ce que :

une première bague isolante (9) isole magnétiquement et relie mécaniquement une partie radiale extérieure magnétiquement perméable (10) d'un moyeu (2) par rapport à une partie radiale moyenne (11) du moyeu (2),

une seconde bague isolante (22) isole et relie ladite partie moyenne (11) par rapport à une partie radiale intérieure (23) du moyeu (2),

un courant électrique passant dans le premier électro-aimant (8) génère un premier flux magnétique (2) pour l'embrayage de blocage à friction (14),

un courant électrique passant dans le second électro-aimant (21) génère un second flux magnétique (24) pour l'embrayage de blocage à crabots (26),

la partie moyenne (11) du moyeu (12) conduit à la fois le premier (12) et le second flux magnétique (24),

la partie moyenne (11) du moyeu (2) porte les premiers éléments de friction (6, 5) de l'embrayage de blocage à friction (14) en étant solidaire d'eux en rotation et elle constitue en outre le premier crabot (20) de l'embrayage de blocage à crabots (26).

5. Embrayage de blocage selon la revendication 1, caractérisé en ce que :

un dispositif analyse une vitesse de rotation relative entre les deux éléments de transmission et il commande automatiquement un courant électrique pour le premier électro-aimant (8),

un interrupteur ferme sur demande un circuit électrique pour le second électro-aimant (21),

ledit dispositif ouvre automatiquement le circuit électrique pour le second électro-aimant (21).